# FASCICULE DE BREVET EUROPEEN

(11) **EP 0 557 188 B1**
(45) Date de publication et mention de la délivrance du brevet: **16.10.1996**
(21) Numéro de dépôt: 93400395.5
(22) Date de dépôt: 17.02.1993
(51) Int. Cl.: G02B 6/44

(54) **Cassette adaptable de lovage et d'épissurage de fibres optiques**
Adaptierbare Kassette zum Aufwickeln und Spleissen von optischen Fibern
Adaptable cassette for coiling down and splicing optical fibers

(30) Priorité: 21.02.1992 FR 9202028
(43) Date de publication de la demande: 25.08.1993
(73) Titulaire: ALCATEL CABLE INTERFACE, F-08330 Vrigne aux Bois (FR)
(72) Inventeur: Milanowski, Michel, F-95620 Parmain (FR); Vincent, Alain, F-77230 Juilly (FR)
(74) Mandataire: Buffiere, Michelle

(56) Documents cités:
- US-A- 4 840 449
- US-A- 4 846 565
- US-A- 5 066 149
- PATENT ABSTRACTS OF JAPAN vol. 9, no. 304 (P-409)(2027) 30 Novembre 1985 & JP-A-60 136 710

## Description

La présente invention porte sur les dispositifs de lovage et d'épissurage de fibres optiques, appelés de manière courante cassettes et ainsi désignés ci-après.

Ces cassettes assurent essentiellement le stockage de surlongueurs laissées sur les fibres pour leur raccordement et la protection des surlongueurs lovées et des raccords de ces fibres optiques. Chaque cassette est affectée à deux fibres à raccorder ou de préférence à plusieurs fibres à raccorder individuellement à plusieurs autres fibres.

Chaque cassette doit garantir également un rayon de courbure minimal aux surlongueurs qui y sont lovées ainsi qu'au niveau de leur arrivée dans les raccords. Elle doit également permettre une manipulation aisée des surlongueurs lovées et des raccords, pour leur mise en place dans la cassette et pour toute intervention ultérieure de maintenance.

Le document FR-A-2 646 928 décrit une telle cassette utilisée dans un module de raccordement de câbles à fibres optiques. La cassette comporte un fond entouré d'un rebord périphérique discontinu. Des accès pour les fibres sont ainsi définis dans ce rebord. Un couvercle ferme la cassette en même temps qu'il ferme le module, dans ce mode d'utilisation de la cassette.

Le fond de cette cassette définit un support de raccords, à un emplacement prévu sur le fond à cet effet, sensiblement dans une première moitié de sa partie médiane. Ce support sert de logement et assure la retenue des raccords des fibres reçues dans la cassette. Il est formé de nervures sur le fond délimitant cet emplacement. Deux des nervures en vis-à-vis présentent des fentes qui se correspondent et dans lesquelles sont retenus les raccords.

Le fond définit également un cylindre saillant, sensiblement dans l'autre moitié de sa partie médiane. Les fibres sont lovées autour de ce cylindre qui assure leur guidage et leur renvoi avec un rayon de courbure minimal requis.

Cette cassette comporte en outre des pattes rabattues vers l'intérieur, sur le rebord. Ces pattes assurent la retenue sous elles des surlongueurs lovées entre le cylindre et le rebord.

Dans le mode d'utilisation de cette cassette, les fibres reçues et lovées dans la cassette sont des fibres nues. Dans d'autres modes d'utilisation de cassettes fonctionnellement analogues à la précédente, les fibres reçues peuvent également être nues ou peuvent être protégées dans des tubes individuels de gainage, mais ne nécessitent pas le guidage et le renvoi des surlongueurs lovées par le cylindre précité. Un tel cylindre encombre alors inutilement la surface du fond et constitue une gène lors des manipulations de fibres et de raccords.

Dans la cassette selon ce document, le support de raccords défini sur le fond impose également l'utilisation de raccords de fibres adaptés à ce support. Or, ces raccords peuvent être de types différents ayant des caractéristiques dimensionnelles et/ou mécaniques différentes d'un type à l'autre. On cite, à titre d'exemples, parmi les types de raccords différents existants, ceux connus sous la marque "Fibrlok" de la société 3M et ceux connus sous la marque "Placoptic" de la société Alliance Technique Industrielle, qui sont à gaine plus ou moins rigide de protection. On peut en variante réaliser ces raccords par une soudure des fibres et une protection de chacune des soudures par une gaine souple. Ces types de raccords peuvent être sélectivement utilisés selon les modes d'utilisation des cassettes et des exigences différentes en regard de leurs caractéristiques propres. Il leur correspond des supports différents.

Les exigences relatives au lovage et au raccordement des fibres optiques dans des cassettes conduisent à la réalisation de cassettes spécifiques et ont des répercursions en conséquence sur les modes et coûts de fabrication.

Le document US-A-4 840 449 divulgue également une cassette de lovage et d'épissurage de fibres optiques, du type de la cassette connue précédente mais comportant deux cylindres de lovage des fibres, prévus côte à côte et d'un même côté de l'axe longitudinal médian du fond et un support de raccords de fibres, prévu de l'autre côté de l'axe médian. Dans cette cassette, le support est amoviblement encliquetable sur le fond entre des pattes de retenue prévues saillantes à cet effet sur le fond. Il est fixé en position à une distance prédéterminée du fond, qui est également muni de butées d'appui du support assurant en même temps un guidage des fibres lovées, de manière à permettre le passage de fibres sous le support et ainsi la formation d'une boucle de lovage de longueur adaptable entre chaque cylindre et l'une des butées. Cette cassette, qui est ainsi adaptée au lovage convenable des fibres, n'est pas pour autant adaptée au maintien de différents types possibles de raccords de ces fibres.

La présente invention a pour but d'éviter les inconvénients des cassettes connues précitées, en rendant les cassettes adaptables aux besoins et exigences spécifiques d'utilisation.

Elle a pour objet une cassette adaptable de lovage et d'épissurage de fibres optiques, comportant un fond sensiblement rectangulaire, un rebord discontinu sensiblement sur la périphérie du fond, des pattes de retenue sur le rebord pour la tenue des fibres sous elles, au moins un support affecté au maintien de raccords de fibres optiques et amoviblement encliquetable sur le fond, un couvercle de fermeture rapporté sur le rebord, et éventuellement un cylindre sur le fond d'un côté de son axe longitudinal médian, pour le lovage des fibres autour du cylindre et/ou contre le rebord, caractérisée en ce qu'à la cassette sont associés différents supports de raccords de fibres, dont au moins l'un de ces différents supports est sélectionnable et amoviblement encliquetable sur ledit fond, les différents supports étant de dimensions différentes adaptées à différents types de raccords, en ce que le cylindre éventuel est également amoviblement encliquetable sur le fond, en ce que ledit fond est plan et comporte, au moins dudit un côté de son axe longitudinal médian , un premier jeu d'ouvertures affecté audit encliquetage amovible dudit cylindre éventuel sur ledit fond et, symétriquement de chaque côté dudit axe longitudinal médian, une pluralité d'autres ouvertures définissant entre elles plusieurs différents deuxièmes jeux d'ouvertures dont chacun est affecté à l'encliquetage amovible de l'un des différents supports de raccords, et en ce que ledit cylindre éventuel est pourvu d'un jeu de pattes d'encliquetage dans ledit premier jeu d'ouvertures et lesdits différents supports de leur propre jeu de pattes d'encliquetage dans le jeu correspondant desdits deuxièmes jeux d'ouvertures.

La cassette selon l'invention peut en outre présenter au moins l'une des caractéristiques additionnelles suivantes :
- elle comporte ledit cylindre et l'un desdits différents supports montés sur ledit fond de part et d'autre dudit axe longitudinal médian ou deux desdits supports montés sur ledit fond de part et d'autre dudit axe longitudinal médian,
- lesdits deuxièmes jeux d'ouvertures sont formés chacun par trois ouvertures, dont l'une d'elles est centrée sur l'axe transversal médian du fond et les deux autres sont symétriques par rapport audit axe transversal et dites ouvertures latérales, et le jeu de pattes d'encliquetage de chacun desdits supports est formé par trois pattes d'encliquetage,
- lesdits deuxièmes jeux d'ouvertures sont définis de chaque côté dudit axe longitudinal par deux ouvertures latérales attenantes audit rebord, deux autres ouvertures latérales en regard des précédentes mais décalées du rebord et une série de troisièmes ouvertures centrées sur ledit axe transversal,
- le jeu de pattes d'encliquetage de chaque support est défini par deux pattes rigides reçues dans les deux ouvertures latérales du jeu d'ouvertures concerné et une patte élastiquement déformable reçue dans l'ouverture centrale dudit jeu d'ouvertures concerné,
- au moins l'un desdits différents supports comporte un premier et un deuxième ensemble de moyens individuels de retenue de premiers et de deuxièmes raccords,
respectivement, sur lequel ledit premier ensemble s'étend en deux premières rangées parallèles, situées sensiblement entre les extrémités de deux premiers bords du support et affectées à la retenue entre elles des premiers raccords, et ledit deuxième ensemble s'étend en une troisième rangée parallèle et entre lesdites premières et affectée à la retenue sur elle des deuxièmes raccords, en rendant lesdites premières rangées inactives, ladite troisième rangée étant solidaire desdits premiers bords du support par des attaches terminales de section réduite et rendues cassables, pour son élimination lorsque lesdits premiers raccords sont adoptés.

Les caractéristiques et avantages de la présente invention ressortiront de la description faite ci-après d'exemples de cassette adaptable ou adaptée, illustrés dans les dessins ci-annexés. Dans ces dessins:
- La figure 1 représente en perspective une cassette adaptée selon la présente invention en définissant un premier type de cassettes,
- la figure 2 est une vue de dessus de la cassette adaptable selon la présente invention,
- la figure 3 est une vue de dessus de la cassette dite du premier type, selon la figure 1, et illustre des adaptations possibles de la cassette de ce premier type,
- la figure 4 est une vue de dessus de la cassette, selon l'invention, rendue d'un deuxième type et illustre des adaptations possibles de la cassette de ce deuxième type,
- les figures 5 et 6 sont deux vues partielles en perspective de l'un des éléments pouvant équiper la cassette adaptable illustrée dans la figure 2,
- la figure 7 est une vue en coupe partielle et brisée de l'un des éléments pouvant équiper la cassette adaptable précitée,
- la figure 8 est une vue de dessus de l'un des éléments pouvant équiper la cassette selon la figure 2, dit support de raccords et lui-même adaptable à un premier ou à un deuxième type de raccords,
- la figure 9 est une vue en coupe à échelle agrandie, faite selon la ligne IX-IX de cette figure 8.

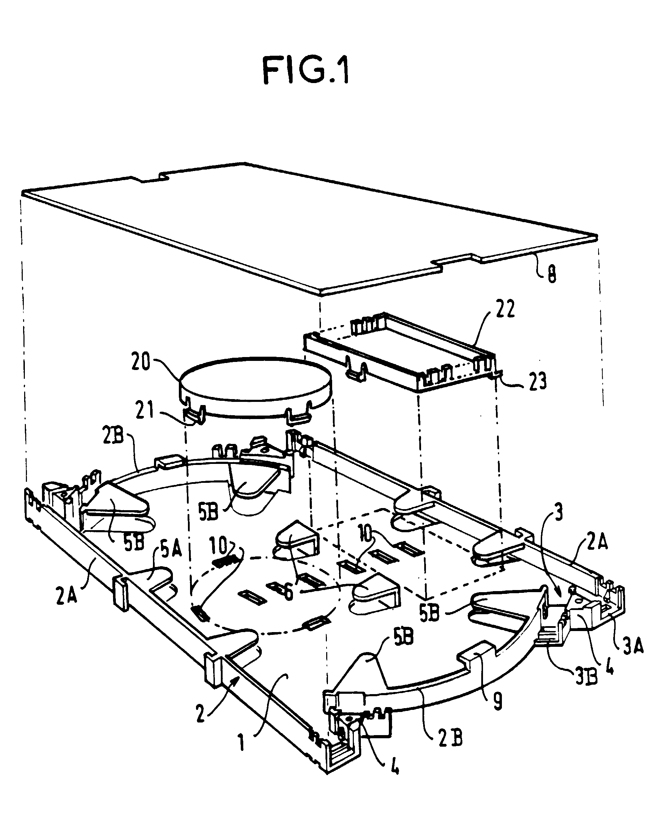

La cassette adaptée, qui est illustrée dans la figure 1, comporte un fond plat 1, sensiblement rectangulaire. Ce fond 1 est prévu pour rendre la cassette adaptable différemment, selon plusieurs types possibles de cassettes.

Un rebord discontinu 2 entoure le fond. Les parties 2A de ce rebord le long des grands côtés du fond sont droites et celles 2B le long des petits côtés du fond sont arquées. Elles définissent entre elles, sur les quatre coins du fond, des accès tels que 3 pour les fibres reçues dans la cassette. Des plots 4 sont saillants sur le fond dans les accès 3. Chacun d'eux est sensiblement de même hauteur que le rebord et de section triangulaire et divise chaque accès en deux canaux d'accès distincts 3A et 3B.

Le rebord 2 présente des pattes rabattues parallèlement au fond vers l'intérieur de la cassette, telles que les deux pattes 5A non terminales sur chaque parties 2A et les deux pattes 5B quasi-terminales sur chaque partie 2B. Le fond 1 présente une paire de pattes saillantes 6, analogues et en regard des pattes 5A. Ces pattes 6 sont légèrement décalées d'un même côté de l'axe longitudinal médian du fond et sont symétriques par rapport à son axe transversal médian.

Le fond est en plastique et est moulé. Le rebord, les pattes et éventuellement les plots proviennent directement de moulage du fond.

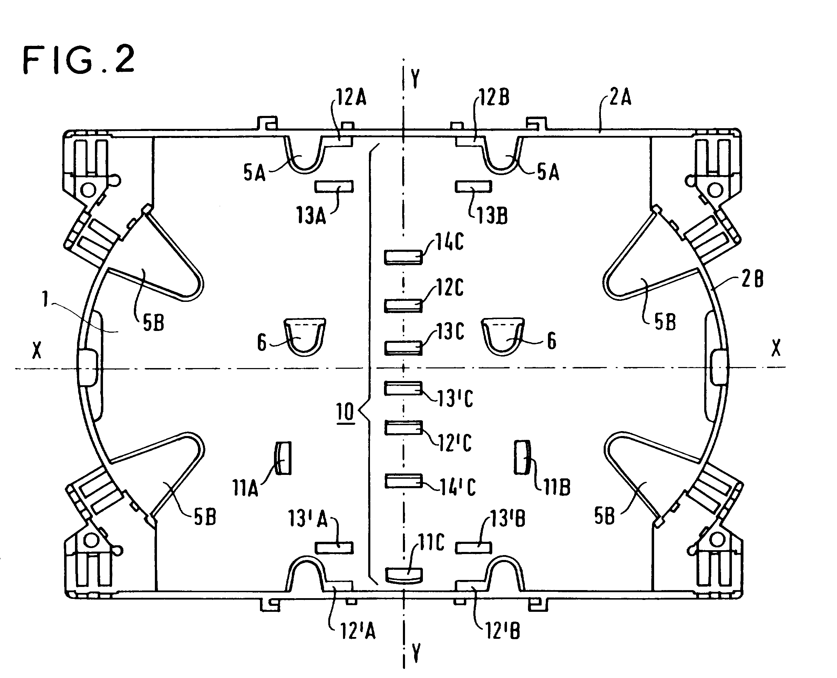

Le fond 1 comporte une pluralité d'ouvertures, autres que celles nécessaires pour l'obtention de moulage des différentes pattes et désignées globalement sous la référence 10 dans cette figure 1. Ces ouvertures 10 permettent les différentes adaptations de la cassette. Elles sont définies avec précision sur le fond comme décrit ci-après en regard de la figure 2.

La cassette selon la figure 1, dite d'un premier type comporte en outre un cylindre 20 ayant deux ou trois pattes d'encliquetage 21 et un support 22 de raccords de fibres optiques ayant trois pattes d'encliquetage 23. Les pattes du cylindre 20 et du support 22 sont reçues dans certaines des ouvertures 10, pour leur montage amovible sur le fond en adaptant la cassette résultante dite alors du premier type.

Un couvercle 8 ferme la cassette adaptée. Il est rapporté et recouvre le rebord. Il est par exemple retenu sous des excroissances 9, formant des petites pattes opposées sur le rebord, et/ou fixé par vis sur les plots 4, après le lovage et le raccordement des fibres reçues dans la cassette et le maintien des raccords sur le support 22.

Les ouvertures précitées, désignées sous la référence globale 10 dans la figure 1, sont précisées en regard de la figure 2, en les référençant individuellement. Elles définissent entre elles différents jeux d'ouvertures, chacun étant formé par trois ouvertures et ayant l'une de ses ouvertures centrée sur l'axe transversal médian YY et ses deux autres dites latérales qui sont symétriques par rapport à cet axe. Les jeux d'ouvertures sont symétriques par rapport à l'axe longitudinal médian XX, à l'exception éventuelle, comme représenté, de l'un des jeux.

Ainsi le fond 1 comporte d'un seul côté de l'axe XX deux ouvertures latérales 11A, 11B, sensiblement à mi-distance entre cet axe et la partie 2A concernée du rebord, et une ouverture 11C centrée sur cet axe XX et relativement proche de cette partie 2A du rebord. Il comporte en outre, de manière symétrique par rapport à l'axe XX, deux groupes de deuxièmes jeux d'ouvertures, ainsi que traduit dans la figure 2 par le signe "prime" accompagnant les références des ouvertures de l'un des deux groupes concernés. L'un de ces groupes est formé par deux ouvertures latérales 12A, 12B attenantes à la partie 2A concernée et aux bords internes de ses pattes 5A, deux autres ouvertures latérales 13A, 13B en regard des précédentes mais décalées de la partie 2A du rebord, et une série des troisièmes ouvertures telles 12C, 13C et 14C centrées sur l'axe YY et relativement proches de l'axe XX. Chacune de ces troisièmes ouvertures définit avec deux des ouvertures latérales 12A, 12B ou 13A, 13B l'un des différents deuxièmes jeux d'ouvertures, qui sont affectés à la fixation des différents supports possibles.

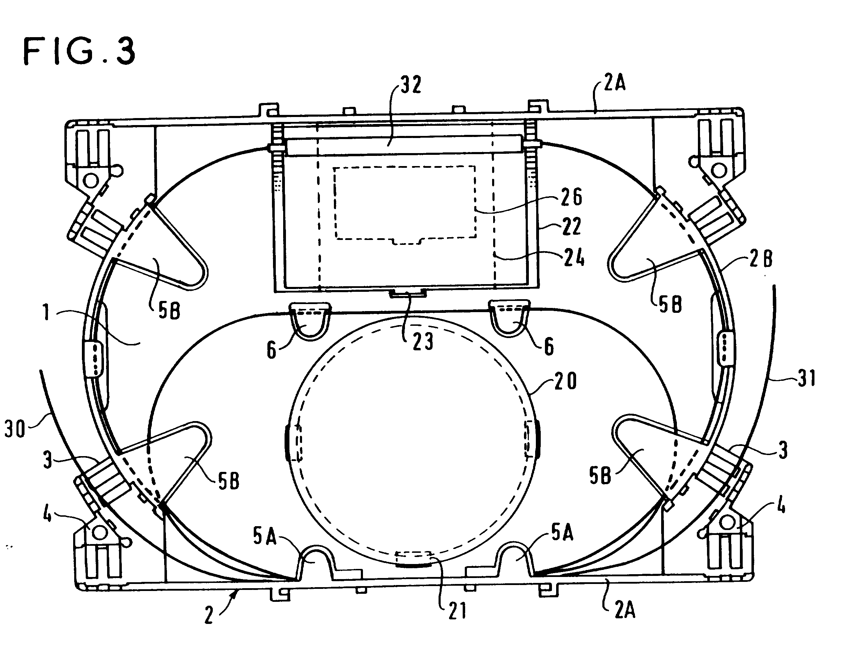

La figure 3 montre une cassette du premier type ainsi réalisée et différentes adaptations possibles de la cassette de ce premier type.

La cassette du premier type comporte le cylindre 20 précité encliqueté dans le premier jeu d'ouvertures 11A, 11B et éventuellement 11C, par le jeu de pattes d'encliquetage qu'il présente. La périphérie de ce cylindre s'étend dans l'espace entre les deux pattes 5A et déborde légèrement de l'autre côté de l'axe XX pour s'étendre dans l'espace entre les deux pattes 6. Cette cassette comporte sur l'autre côté de l'axe XX le support 22 précité, ou l'un de deux autres supports 24 et 26 possibles, qui est encliqueté dans le jeu d'ouvertures qui correspond aux trois pattes d'encliquetage que chacun d'eux présente.

Sur cette figure 3, on a en outre illustré le mode d'utilisation de la cassette de ce premier type, en représentant deux des fibres optiques 30, 31, reçues dans la cassette par deux des canaux d'accès appartenant l'un et l'autre aux deux accès 3 situés de part et d'autre du cylindre 20 sur la moitié du fond qui porte ce cylindre. Ces fibres sont lovées de manière lâche autour du cylindre sur au moins un tour et sont retenues sous les pattes 5A et 6 de part et d'autre du cylindre. Leurs parties terminales viennent par la périphérique de la cassette jusqu'au support 22 et sont raccordées l'une à l'autre par le raccord 32 retenu en place sur ce support.

En regard des différents supports 22, 24 et 26 possibles, on note que ceux-ci sont dimensionnés en fonction du type de raccords que chacun peut recevoir, les types de raccords étant différents d'un support à un autre, et en fonction du nombre de fibres traitées dans la cassette. On note aussi en regard des figures 2 et 3 que l'utilisation des deux ouvertures latérales 12A, 12B pour la fixation du support sélectionné entraîne la suppression des deux pattes 5A, initialement prévues sur la partie 2A attenante du rebord.

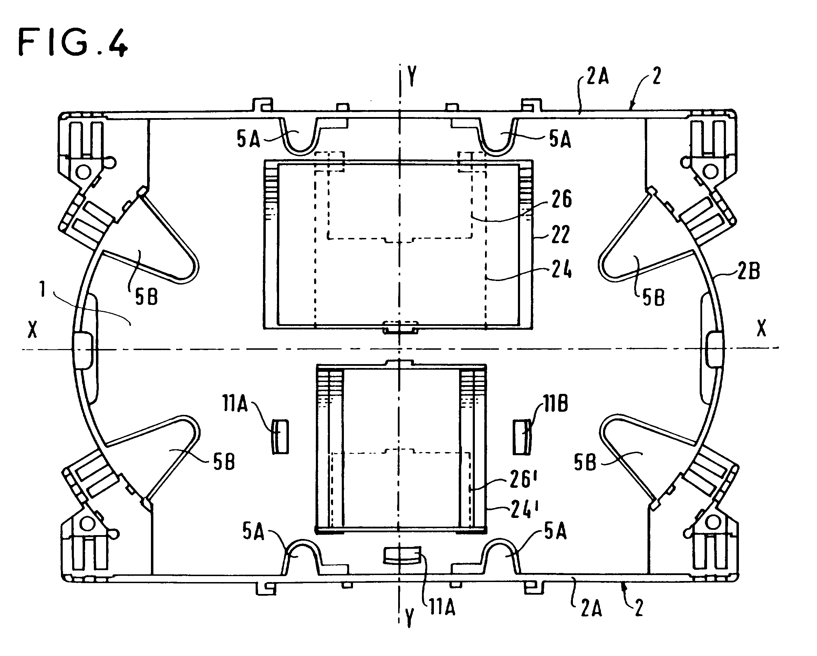

La figure 4 montre une cassette d'un deuxième type pouvant être réalisée et des adaptations possibles de cette cassette du deuxième type.

Cette cassette du deuxième type est sans cylindre précité sur le fond 1 mais comporte deux supports de raccords encliquetés d'un côté et de l'autre de l'axe XX dans deux jeux d'ouvertures.

Chacun de ces supports est sélectionnable parmi l'un des différents supports 22, 24 et 26, selon les raccords utilisés et le nombre de fibres traitées dans la cassette, les fibres raccordées individuellement étant divisées en deux groupes et les raccords de chaque groupe étant retenus sur chaque support correspondant. Deux supports analogues ont la même référence numérique, qui est accompagnée pour l'un d'eux par le signe prime. La cassette peut également recevoir un deuxième support analogue au support 22.

Dans cette cassette du deuxième type, le lovage des fibres non représentées s'effectue exclusivement sur la périphérie de la cassette. On n'utilise alors que les ouvertures latérales 13A et 13B et non pas les ouvertures latérales 12A et 12B pour conserver les pattes 5A sur les deux parties 2A du rebord. Les pattes 6 initialement prévues sur le fond 1 (figure 2) sont dans ce cas par contre supprimées.

En variante les pattes 6 peuvent être prévues sur l'un des bords des supports 22, 24 et 26 et non plus sur le fond et peuvent être cassées, le cas échéant, selon la cassette adaptée souhaitée.

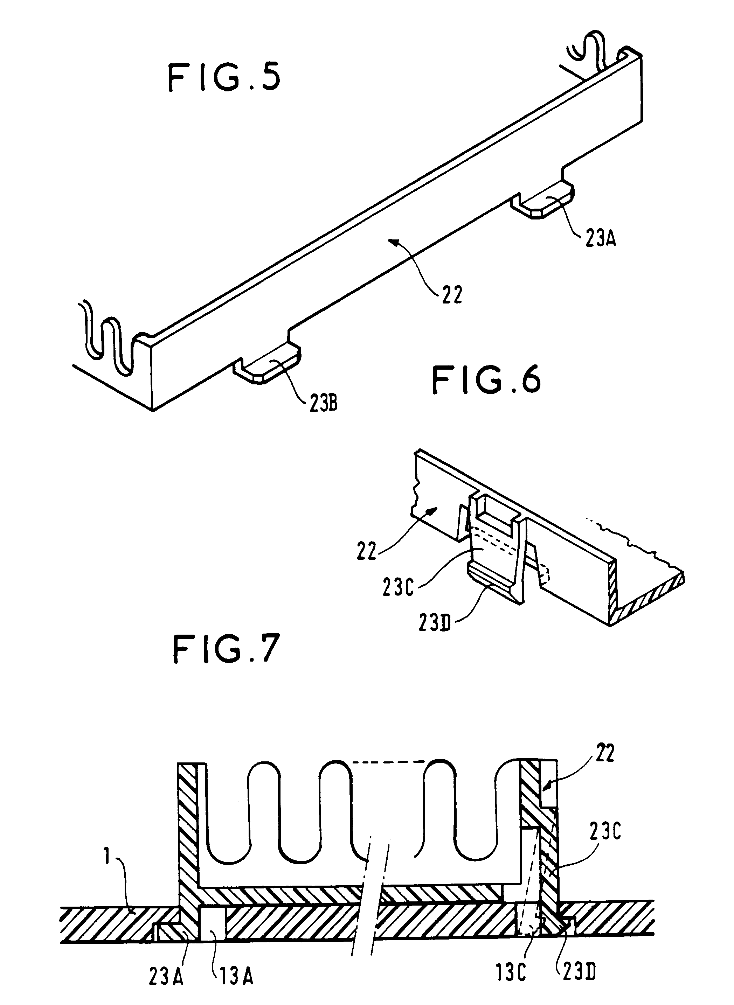

Les figures 5 à 7 permettent de préciser l'encliquetage de l'un quelconque des éléments rapporté et fixé sur le fond, tel que le support 22 précité. On a montré dans la figure 5 ses deux pattes notées 23A et 23B extérieurement saillantes sur l'un des bords du support, qui sont reçues dans les deux ouvertures latérales du jeu d'ouvertures correspondant, et dans la figure 6 sa troisième patte, notée 23C centrée et saillante sur le bord opposé du support, qui est quant à elle reçue dans la troisième ouverture centrée sur l'axe transversal et appartenant à ce jeu. Ces figures 5 à 7 font ressortir que les deux pattes 23A et 23B sont droites, relativement rigides et peu déformables, alors que la patte 23C est souple et élastiquement déformable. Les deux premières pattes telles que 23A sont directement engagées dans les ouvertures latérales telles que 13A (ou éventuellement 12A). La troisième patte 23C laisse un jeu entre elle et le bord du support sur laquelle elle est formée et se termine par une dent en crochet 23D. Elle permet ainsi une déformation élastique importante pour son insertion dans l'ouverture 13C (ou éventuellement 12C) et assure par retour élastique une tenue satisfaisante du support sur le fond.

En regard du cylindre précité 20, on indique que celui-ci a une patte rigide et une patte élastiquement déformable, qui sont sensiblement diamétralement opposées et reçues dans les ouvertures latérales 11A et 11B du jeu d'ouvertures correspondant (figure 2), et éventuellement une troisième patte sensiblement à 90° des deux précédentes, qui est élastiquement déformable et reçue dans l'ouverture 11C.

Ces pattes d'encliquetage s'encastrent sous le fond 1, comme représenté dans la figure 7, pour ne pas rester saillantes sous le fond.

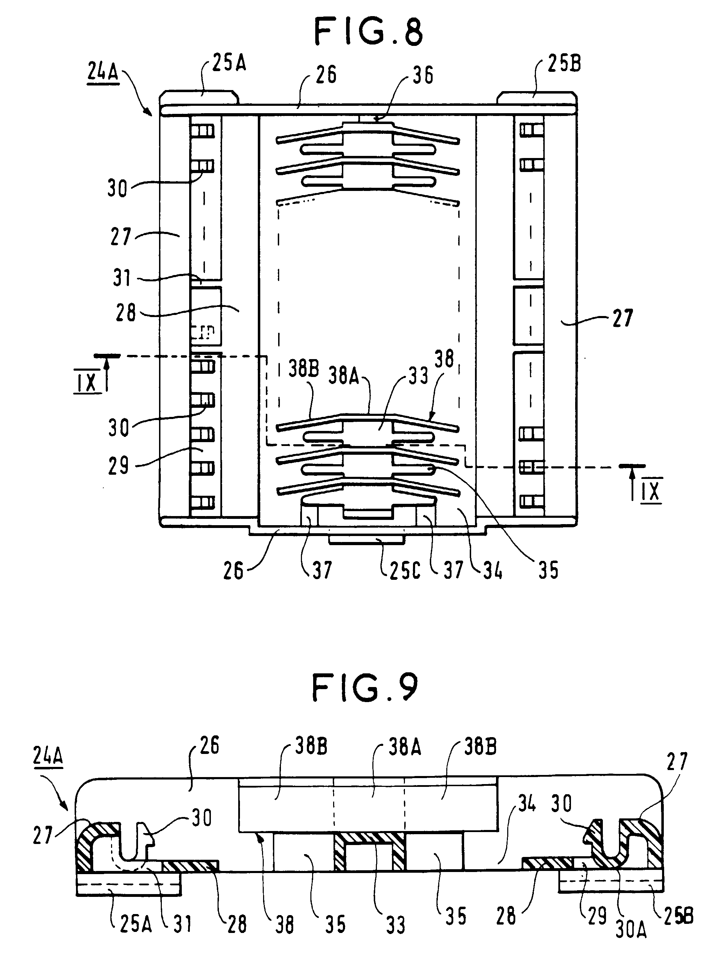

Dans les figures 8 et 9, on a illustré en variante de l'un et/ou l'autre des supports précédents un support dit adaptable et noté 24A. Ce support 24A correspond fonctionnellement aux supports 24 et 26 précédents (figure 3 ou 4) et est sélectivement affecté à la retenue du type de raccords reçus par le support 24 ou du type différent de raccords reçus par le support 26. Le support 22 précédent peut lui-même être rendu adaptable de la même façon pour recevoir ses propres raccords ou ceux reçus par le support 26.

Ce support 24A est de mêmes dimensions que le support 24. Ses pattes d'encliquetage sont notées 25A et 25B pour les deux rigides et 25C pour la troisième élastique, sur deux bords opposés 26. Chacune des portions terminales le long de ses deux autres bords est divisée en une partie dite extérieure 27 et une partie dite intérieure 28, par un évidement 29 dans lequel est saillante une rangée de petites dents élastiques 30. Ces dents 30 sont en vis-à-vis et tournées en regard les unes des autres, d'une rangée à l'autre. Elles assurent entre elles d'une rangée à l'autre la retenue possible de premiers raccords individuels auxquels ces deux rangées de dents 30 sont affectées.

Les rangées de dents 30 sont reliées aux parties extérieures 27. Deux pattes de liaison 31, sensiblement médianes, relient les parties extérieure et intérieure 27 et 28 l'une à l'autre, celles-ci étant en outre reliées par les bords 26. La partie extérieure 27 est sensiblement à niveau avec le bout des dents 30 et la partie intérieure 28 avec les pieds 30A des dents 30. La partie extérieure a son bord extérieur arrondi et son bord intérieur relié aux pieds des dents. La partie intérieure 28 forme une surface d'appui pour le corps des premiers raccords retenus entre les dents 30.

Ce support 24A comporte un pont médian 33, parallèle aux rangées de dents 30 et séparé d'elles et des deux parties intérieures 28 par deux évidements 34 de part et d'autre du pont. Les bords du pont sont largement crénelé et définissent des pattes latérales 35, au pas et en regard des dents 30. L'une des extrémités du pont est reliée par une attache axiale 36 et l'autre par deux attaches 37 aux deux bords 26 du support. Ces attaches sont de section réduite et rendues sectionnables ou cassables par rotation du pont autour d'elles, pour l'élimination éventuelle du pont.

Ce pont porte une rangée de nervures transversales 38, saillantes sur lui. Chaque nervure est divisée par le pont, en une partie centrale 38A, solidaire du pont et sur la largeur de celui-ci, et en deux parties latérales 38B dites ailettes déformables. Ces ailettes prolongent de part et d'autre les parties centrales des nervures et s'étendent inclinées en biais d'un même côté des parties centrales. Les ailettes déformables de l'une des nervures et la partie centrale de la nervure suivante assurent la retenue entre elles d'un raccord d'un deuxième type correspondant, ce dernier reposant par ailleurs sur le pont et les deux pattes latérales 35 entre les deux nervures considérées. Le bord supérieur des ailettes, sur leur face de retenue d'un raccord, est de préférence chanfreiné pour des facilités d'insertion en place du raccord.

Le pont 33 est de section en U renversé pour des raisons de moulage du support 24A. La base du U est sensiblement au niveau des dents 30. Ce pont est éliminé à volonté ou au contraire conservé, selon les raccords adoptés. Dans le premier cas il permet le montage des raccords entre les deux rangées de dents 30. Dans le deuxième cas il rend inactives les deux rangées de dents 30.

En variante par rapport aux exemples décrits ci-avant, on note également que le fond peut recevoir un seul support plus large que les précédents et encliqueté dans les ouvertures latérales 13A et 13B (ou 13'A et 13'B) et dans l'une des ouvertures centrales 13'C, 12'C et 14'C (ou 13C, 12C, 14C) qui lui correspondent.

## Revendications

1. Cassette adaptable de lovage et d'épissurage de fibres optiques, comportant un fond (1) sensiblement rectangulaire, un rebord discontinu (2A, 2B) sensiblement sur la périphérie du fond, des pattes de retenue (5A, 5B) sur le rebord pour la tenue des fibres sous elles, au moins un support (22, 24, 26) affecté au maintien de raccords de fibres optiques et amoviblement encliquetable sur le fond, un couvercle de fermeture (8) rapporté sur le rebord, et éventuellement un cylindre (20) sur le fond d'un côté de son axe longitudinal médian (XX), pour le lovage des fibres autour du cylindre et/ou contre le rebord, caractérisée en ce qu'à la cassette sont associés différents supports (22, 24,26) de raccords de fibres, dont au moins l'un de ces différents supports est sélectionnable et amoviblement encliquetable sur ledit fond, les différents supports étant de dimensions différentes adaptées à différents types de raccords, en ce que le cylindre éventuel (20) est également amoviblement encliquetable sur le fond, en ce que ledit fond (1) est plan et comporte, au moins dudit un côté de son axe longitudinal médian (XX), un premier jeu d'ouvertures (11A, B, C) affecté audit encliquetage amovible dudit cylindre éventuel (20) sur ledit fond et, symétriquement de chaque côté dudit axe longitudinal médian, une pluralité d'autres ouvertures (12A, B, C ; 13A, B, C ; 14C) définissant entre elles plusieurs différents deuxièmes jeux d'ouvertures dont chacun est affecté à l'encliquetage amovible de l'un des différents supports de raccords (22, 24, 26), et en ce que ledit cylindre éventuel (20) est pourvu d'un jeu de pattes (21) d'encliquetage dans ledit premier jeu d'ouvertures et lesdits différents supports de leur propre jeu de pattes (23)d'encliquetage dans le jeu correspondant desdits deuxièmes jeux d'ouvertures.

2. Cassette selon la revendication 1, caractérisée en ce qu'elle comporte ledit cylindre (20) et l'un desdits différents supports (22, 24, 26), montés sur ledit fond de part et d'autre dudit axe longitudinal médian, ou deux desdits différents supports (22, 24, 26) montés sur ledit fond de part et d'autre dudit axe longitudinal médian.

3. Cassette selon l'une des revendications 1 et 2, caractérisée en ce que lesdits deuxièmes jeux d'ouvertures sont formés chacun par trois ouvertures, dont l'une d'elles (12C; 13C; 14C) est centrée sur l'axe transversal médian (YY) du fond et les deux autres (12A, B; 13A, B) sont symétriques par rapport audit axe transversal et dites ouvertures latérales, et en ce que le jeu de pattes d'encliquetage (23) de chacun desdits supports est formé par trois pattes d'encliquetage (21A, B, C).

4. Cassette selon la revendication 3, caractérisée en ce que lesdits deuxièmes jeux d'ouvertures sont définis de chaque côté dudit axe longitudinal par deux ouvertures latérales (12A, B) attenantes audit rebord (2), deux autres ouvertures latérales (13A, B) en regard des précédentes mais décalées du rebord et une série de troisièmes ouvertures (12C, 13C, 14C) centrées sur ledit axe transversal.

5. Cassette selon l'une des revendications 3 et 4, caractérisée en ce que le jeu de pattes d'encliquetage de chaque support est défini par deux pattes rigides (21A, B) reçues dans les deux ouvertures latérales du deuxième jeu d'ouvertures concerné et une patte élastiquement déformable (21C) reçue dans l'ouverture centrale dudit deuxième jeu d'ouvertures concerné.

6. Cassette selon l'une des revendications 1 à 5, caractérisée en ce que lesdites pattes d'encliquetage s'encastrent dans ledit fond (1), pour ne pas rester saillantes sous le fond quand ledit cylindre et ou ledit support auquel elles appartiennent est encliqueté sur le fond.

7. Cassette selon l'une des revendications 1 à 6, caractérisée en ce qu'elle présente, aux quatre coins dudit fond, quatre accès possibles et sélectionnables (3), pour les fibres, délimités par les portions terminales des parties dudit rebord, lesdites parties du rebord étant droites pour deux opposées d'entre elles et étant arquées et entre les deux parties droites pour les deux autres, et présente en outre des plots (4) saillants sur le fond dans lesdits accès en les divisant chacun en deux canaux d'accès (3A, 3B) eux-mêmes sélectionnables dans chaque accès sélectionné.

8. Cassette selon l'une des revendications 1 à 7, caractérisée en ce qu'au moins l'un (24A) desdits différents supports (22, 24, 26) comporte un premier et un deuxième ensemble de moyens individuels (30, 38) de retenue de premiers et de deuxièmes raccords, respectivement, sur lequel ledit premier ensemble s'étend en deux premières rangées parallèles, situées sensiblement entre les extrémités de deux premiers bords (26) du support (24A) et affectées à la retenue entre elles des premiers raccords, et ledit deuxième ensemble s'étend en une troisième rangée parallèle et entre lesdites premières et affectée à la retenue sur elle des deuxièmes raccords en rendant lesdites premières rangées inactives, et en ce que ladite troisième rangée est solidaire desdits premiers bords du support par des attaches terminales (36, 37) de section réduite et rendues cassables, pour son élimination lorsque lesdits premiers raccords sont adoptés.

9. Cassette selon la revendication 8, caractérisée en ce que ladite troisième rangée forme un pont médian (33) équipé desdites attaches terminales, entre lesdits premiers bords du support (24A), sur lequel lesdits moyens individuels correspondants (38) sont constitués par des nervures saillantes chacune divisée en une partie dite centrale (38A) sur la largeur dudit pont et deux parties dites latérales (38B) de part et d'autre dudit pont et inclinées d'un même côté des parties centrales desdites nervures.

10. Cassette selon la revendication 9, caractérisée en ce que ledit pont (33) présente en outre des pattes latérales (35) s'étendant, sensiblement au même niveau que le pont, de part et d'autre dudit pont et entre les nervures successives (38).

## Patentansprüche

1. Anpaßbare Aufschieß- und Aufspleißkassette für Lichtleitfasern, die einen im wesentlichen rechteckigen Boden (1), einen unterbrochenen Rand (2A, 2B) im wesentlichen auf dem Umfang des Bodens, Haltelaschen (5A, 5B) auf dem Rand für den Halt der Fasern unter ihnen, mindestens einen Träger (22, 24, 26), der dem Halt von Anschlüssen für Lichtleitfasern zugeordnet und lösbar auf dem Rand einrastbar ist, einen an den Rand angesetzten Verschlußdeckel (8) und ggf. einen Zylinder (20) auf dem Boden auf der einen Seite seiner mittleren Längsachse (XX) für das Aufschießen der Fasern um den Zylinder und/oder gegen den Rand aufweist, dadurch gekennzeichnet, daß der Kassette verschiedene Träger (22, 24, 26) für Faseranschlüsse zugeordnet sind, von denen mindestens einer auswählbar und lösbar auf dem Boden einrastbar ist, wobei die verschiedenen Träger verschiedene Abmessungen aufweisen, die verschiedenen Anschlußtypen angepaßt sind, daß der eventuelle Zylinder (20) ebenfalls lösbar auf dem Boden einrastbar ist, daß der Boden (1) eben ist und mindestens auf einer Seite der mittleren Längsachse (XX) einen ersten Satz Öffnungen (11A, 11B, 11C), der dem lösbaren Einrasten des eventuellen Zylinders (20) auf dem Boden zugeordnet ist, und symmetrisch auf jeder Seite der mittleren Längsachse eine Vielzahl weiterer Öffnungen (12A, 12B, 12C; 13A, 13B, 13C; 14C) aufweist, die zwischen sich mehrere verschiedene zweite Sätze von Öffnungen definieren, die je dem lösbaren Einrasten eines der verschiedenen Anschlußträger (22, 24, 26) zugeordnet sind, und daß der eventuelle Zylinder (20) mit einem Satz von Einrastlaschen (21) in den ersten Satz Öffnungen und die verschiedenen Träger mit ihrem eigenen Satz Einrastlaschen (23) im entsprechenden Satz der zweiten Sätze von Öffnungen versehen sind.

2. Kassette nach Anspruch 1, dadurch gekennzeichnet, daß sie den Zylinder (20) und einen der verschiedenen auf den Boden zu beiden Seiten der mittleren Längsachse montierten Träger oder zwei der auf den Boden zu beiden Seiten der mittleren Längsachse montierten Träger (22, 24, 26) aufweist.

3. Kassette nach einem der Ansprüche 1 und 2, dadurch gekennzeichnet, daß die zweiten Sätze von Öffnungen je von drei Öffnungen gebildet werden, von denen eine (12C, 13C; 14C) auf die mittlere Querachse (YY) des Bodens zentriert und die beiden anderen (12A, 12B; 13A, 13B) symmetrisch in Bezug auf die Querachse angeordnet sind und seitliche Öffnungen genannt werden, und daß der Satz von Einrastlaschen (23) jedes dieser Träger von drei Einrastlaschen (21A, 21B, 21C) gebildet wird.

4. Kassette nach Anspruch 3, dadurch gekennzeichnet, daß die zweiten Sätze von Öffnungen auf beiden Seiten der Längsachse durch zwei an den Rand (2) grenzende seitliche Öffnungen (12A, B), zwei weitere seitliche Öffnungen (13A, 13B) gegenüber den vorhergehenden, aber vom Rand verschoben, und eine Reihe von dritten Öffnungen (12C, 13C, 14C) definiert werden, die auf die Querachse zentriert sind.

5. Kassette nach einem der Ansprüche 3 und 4, dadurch gekennzeichnet, daß der Satz von Einrastlaschen jedes Trägers von zwei steifen Laschen (21A, 21B), die in die beiden seitlichen Öffnungen des betroffenen Satzes von Öffnungen eindringen, und einer elastisch verformbaren Lasche (21C) definiert werden, die in die zentrale Öffnung des betroffenen Satzes von Öffnungen eindringt.

6. Kassette nach einem der Ansprüche 1 bis 5, dadurch gekennzeichnet, daß die Einrastlaschen in den Boden (1) eingelassen sind, um nicht unter dem Boden vorzustehen, wenn der Zylinder oder der Träger, zu dem sie gehören, auf dem Boden eingerastet wird.

7. Kassette nach einem der Ansprüche 1 bis 6, dadurch gekennzeichnet, daß sie an den vier Ecken des Bodens vier mögliche und wählbare Zugänge (3) für die Fasern aufweist, die von den Endabschnitten der Bereiche des Rands gebildet werden, wobei zwei entgegengesetzte Bereiche dieses Rands gerade und die beiden anderen zwischen den beiden geraden Bereichen liegenden Bereiche bogenförmig sind, und daß sie außerdem Klötzchen (4) aufweist, die auf dem Boden in diesen Zugängen vorspringen, indem sie sie je in zwei Zugangskanäle (3A, 3B) aufteilen, die selbst in jedem gewählten Zugang auswählbar sind.

8. Kassette nach einem der Ansprüche 1 bis 7, dadurch gekennzeichnet, daß mindestens einer (24A) der verschiedenen Träger (22, 24, 26) eine erste und eine zweite Gruppe von individuellen Mitteln (30, 38) für den Halt der ersten bzw. zweiten Anschlüsse enthält, wobei die erste Gruppe sich in zwei ersten parallelen Reihen erstreckt, die im wesentlichen zwischen den Enden von zwei ersten Rändern (26) des Trägers (24A) angeordnet sind, und dem Halt der ersten Anschlüsse zwischen ihnen dient, und die zweite Gruppe sich in einer dritten parallelen Reihe zwischen den ersten Reihen erstreckt und dem Halt der zweiten Anschlüsse auf ihr dient, indem sie die ersten Reihen inaktiv macht, wobei die dritte Reihe mit den ersten Rändern des Trägers über zerbrechliche Endbefestigungen (36, 37) verringerten Querschnitts fest verbunden ist, damit sie entfernt werden kann, wenn die ersten Anschlüsse gewählt werden.

9. Kassette nach Anspruch 8, dadurch gekennzeichnet, daß die dritte Reihe eine mittlere Brücke (33) bildet, die mit den Endbefestigungen ausgestattet ist und zwischen den ersten Rändern des Trägers (24A) liegt, auf dem die entsprechenden individuellen Mittel (38) aus vorstehenden Rippen bestehen, die je in einen zentralen Bereich (38A) über die Breite der Brücke und zwei seitliche Bereiche (38B) zu beiden Seiten der Brücke aufgeteilt sind, die auf einer gleichen Seite der zentralen Bereiche der Rippen geneigt sind.

10. Kassette nach Anspruch 9, dadurch gekennzeichnet, daß die Brücke (33) außerdem seitliche Laschen (35) aufweist, die sich im wesentlichen in gleicher Höhe wie die Brücke zu beiden Seiten der Brücke und zwischen den aufeinanderfolgenden Rippen (38) erstrecken.

## Claims

1. An adaptable cassette for coiling and splicing optical fibers, said cassette including a substantially rectangular bottom (1), a discontinuous rim (2A, 2B) substantially around the periphery of the bottom, retaining tabs (5A, 5B) on the rim, with the fibers being held underneath the tabs, at least one support (22, 24, 26) assigned to hold the optical fiber connections and which is removably snap-fastenable on the bottom, a closing cover (8) attached to the rim, and optionally a cylinder (20) on the bottom on one side of its middle longitudinal axis (XX) so that the fibers can be coiled around the cylinder and/or against the rim;
said cassette being characterized in that different fiber connection supports (22, 24, 26) are associated with the cassette, with at least one of said different supports being selectable and removably snap-fastenable on said bottom, the different supports being of different sizes adapted to different types of connection, in that the optional cylinder (20) is also removably snap-fastenable on the bottom, in that said bottom (1) is plane and includes, at least on said one side of its middle longitudinal axis (XX), a first set of openings (11A, B, C) assigned to said removable snap-fastening of said optional cylinder (20) on said bottom, and, symmetrically on either side of said middle longitudinal axis, a plurality of other openings (12A, B, C; 13A, B, C; 14C) co-operating to define a plurality of different second sets of openings, each set being assigned to the removable snap-fastening of one of the different connection supports (22, 24, 26), and in that said optional cylinder (20) is provided with a set of snap-fastening catches (21) which fasten into said first set of openings, and each of said different supports is provided with its own set of snap-fastening catches (23) which fasten into the corresponding set of said second sets of openings.

2. A cassette according to claim 1, characterized in that it includes said cylinder (20) and one of said different supports (22, 24, 26) mounted on said bottom on either side of said middle longitudinal axis, or two of said different supports (22, 24, 26) mounted on said bottom on either side of said middle longitudinal axis.

3. A cassette according to claim 1 or 2, characterized in that each of said second sets of openings is formed by three openings, one opening (12C; 13C; 14C) being centered on the middle transverse axis (YY) of the bottom, and the other two openings (12A, B; 13A, B) being symmetrical about said transverse axis and being referred to as "side openings", and in that the set of snap-fastening catches (23) on each of said supports is formed by three snap-fastening catches (21A, B, C).

4. A cassette according to claim 3, characterized in that said second sets of openings are defined on either side of said longitudinal axis by two side openings (12A, B) adjoining said rim (2), two other side openings (13A, B) facing the preceding openings but offset from the rim, and a series of third openings (12C, 13C, 14C) centered on said transverse axis.

5. A cassette according to claim 3 or 4, characterized in that the set of snap-fastening catches on each support is defined by two rigid catches (21A, B) received in the two side openings of the second set of openings in question, and an elastically deformable catch (21C) received in the central opening of said second set of openings in question.

6. A cassette according to any one of claims 1 to 5, characterized in that said snap-fastening catches engage under said bottom (1), so that they do not project from under the bottom when said cylinder and/or said support to which they belong is fastened on the bottom.

7. A cassette according to any one of claims 1 to 6, characterized in that, at the four corners of said bottom, the cassette has four possible selectable accesses (3) for the fibers, said accesses being delimited by the end portions of the segments of said rim, two opposite ones of said segments of the rim being straight, and the two other segments being curved and between the two straight segments. said cassette further having projecting blocks (4) on the bottom in said accesses, dividing each access into two access channels (3A, 3B) which are in turn selectable in each selected access.

8. A cassette according to any one of claims 1 to 7, characterized in that at least one (24A) of said different supports (22, 24, 26) includes a first set and a second set of individual retaining means (30, 38) for respectively retaining first and second connections, on which support said first set extends in two first parallel rows situated substantially between the ends of two first edges (26) of the support (24A) and assigned to retaining the first connections between the two first rows, and said second set extends in a third row parallel to and between said first parallel rows, and assigned to retaining the second connections on the third row and making said first rows inactive, and in that said third row is fixed to said first edges of the support by end fastenings (36. 37) of small cross-section and made breakable, so that the third row can be removed when said first connections are selected.

9. A cassette according to claim 8, characterized in that said third row forms a middle bridge (33) equipped with said end fastenings between said first edges of the support (24A), on which middle bridge the corresponding individual means (38) are constituted by projecting ribs each divided into a "central" portion (38A) over the width of said bridge, and two "side" portions (38B) on either side of said bridge and sloping the same way from the central portions of said ribs.

10. A cassette according to claim 9, characterized in that said bridge (33) further has side tabs (35) extending substantially level with the bridge on either side of the bridge and between the successive ribs (38).
